# EUROPEAN PATENT SPECIFICATION

(11) **EP 4 488 206 B1**
(45) Date of publication and mention of the grant of the patent: **25.03.2026**
(21) Application number: 23461621.7
(22) Date of filing: 06.07.2023
(51) Int. Cl.: B65G 69/00

(54) **AUTOMATIC POSITIONING SYSTEM FOR A SEMI-TRAILER**
AUTOMATISCHES POSITIONIERUNGSSYSTEM FÜR EINEN SATTELAUFLIEGER
SYSTÈME DE POSITIONNEMENT AUTOMATIQUE POUR SEMI-REMORQUE

(43) Date of publication of application: 08.01.2025
(73) Proprietor: WDX Spolka Akcyjna, 02-677 Warszawa (PL)
(72) Inventor: JAGIELLO, Marek, 99-100 Leczyca (PL)
(74) Representative: Kancelaria Eupatent.pl Sp. z o.o.

(56) References cited:
- EP-A1- 0 357 087
- WO-A1-2016/007321
- FR-A- 1 148 982
- FR-A1- 2 926 293
- US-A- 2 489 869
- US-A1- 2022 162 021

## Description

### TECHNICAL FIELD

The present invention relates to an automatic positioning system for a semi-trailer, useful in particular to facilitate loading of pallets by an automatic pallet loading system.

### BACKGROUND

Semi-trailers are used for transportation of various goods, which are often loaded on pallets. There are known automatic pallet loading systems which enable quick and efficient loading of pallets to the semi-trailer. However, such systems require the semi-trailer to be precisely positioned in relation to the automatic pallet loading equipment. The correct positioning requires a precise horizontal and vertical alignment of the semi-trailer, i.e. a coaxial alignment of the longitudinal axis of the semi-trailer with the longitudinal axis of the loading system (which determines direction of loading the pallets) and a planar alignment of the floor of the semi-trailer and the carrying surface of the loading system. Furthermore, the alignment shall be adjusted during the loading operation as the semi-trailer may change its position while being loaded.

There are known various types of positioning systems which use special brackets that fix the position of the semi-trailer in relation to, for example, loading ramps or docks, or to dedicated equipment. However, use of additional dedicated equipment in the form of the positioning brackets requires the semi-trailer and the positioning system to be compatible with such brackets and requires extra labor and time to position the semi-trailer.

US 2 489 869 A discloses an automatic positioning system comprising the features mentioned in the preamble of claim 1.

### SUMMARY OF THE INVENTION

There is a need to provide an automatic positioning system which will solve at least some of the aforementioned problems.

The object of the invention is an automatic positioning system for positioning a semi-trailer with respect to a loading platform. The system comprises:
- a front positioning platform for supporting front wheels carrying the semi-trailer and a rear positioning platform for supporting rear wheels carrying the semi-trailer, each of the positioning platforms having its supporting surface movable laterally and vertically;
- a pair of flaps, each being pivotally mounted at their first end to an edge of the loading platform and configured for their second end to rest on a floor of the semi-trailer, wherein ach of the flaps comprises an angular sensor configured to detect the tilt angle of the flap;
- front lateral position sensors mounted at opposite sides of the front positioning platform and rear lateral position sensors mounted at opposite sides of the rear positioning platform, each configured to measure a lateral distance between the sensor and a side surface of the semi-trailer;
- at least one front vertical position sensor mounted above the front positioning platform and at least one rear position sensor mounted above the rear positioning platform, each configured to measure a vertical distance between the sensor and a top surface of the semi-trailer; and
- a controller connected to the sensors and configured to, based on the sensor signals, control the lateral and vertical position of the front platform and of the rear platform.

The system may comprise a pair of front vertical position sensors and a pair of rear position sensors.

The front position sensors can be mounted on a front post having a form of a gate located asides and above the space for accommodating the semi-trailer.

The rear position sensors can be mounted on a rear post having a form of a gate located asides and above the space for accommodating the semi-trailer.

At last one of the left platform and the right platform can be movable vertically by allowing variation of its lateral tilt.

The system according to the invention allows precise positioning of semi-trailers in relation to automatic loading devices, regardless of the type of semi-trailers and their structure. The operation of the system can be fully automatic and allows to align the position of the semi-trailer with the automatic pallet loading system within a matter of tens of seconds. Once the position is aligned, the system can monitor the position and perform alignment correction in response to varying load of the semi-trailer as it is loaded or unloaded.

### BRIEF DESCRIPTION OF DRAWING

The object of the invention is shown by means of example embodiment on a drawing, wherein:

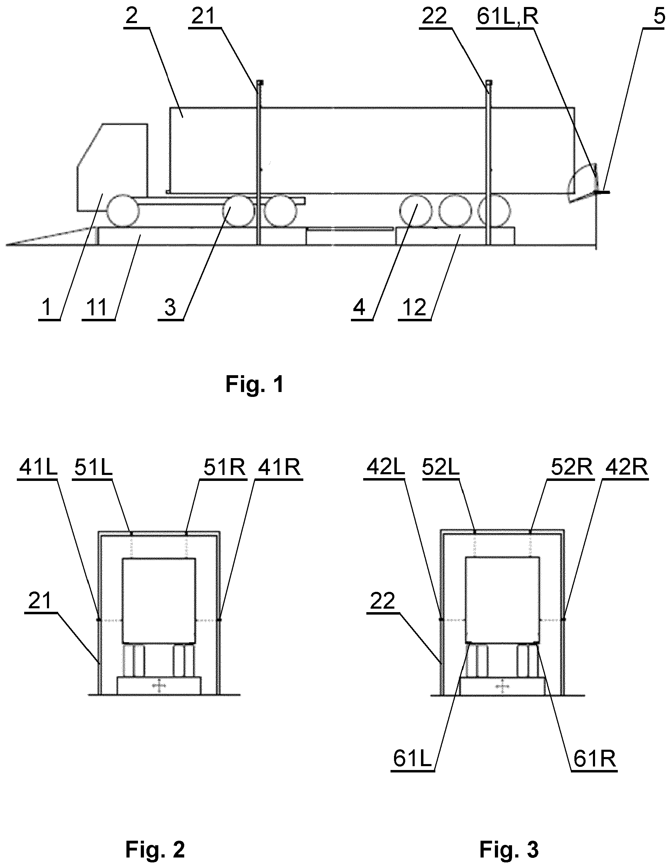

Fig. 1 shows the automatic positioning system in side view,
Fig. 2 shows the system in a cross-section at the front post,
Fig. 3 shows the system in a cross-section at the flaps,

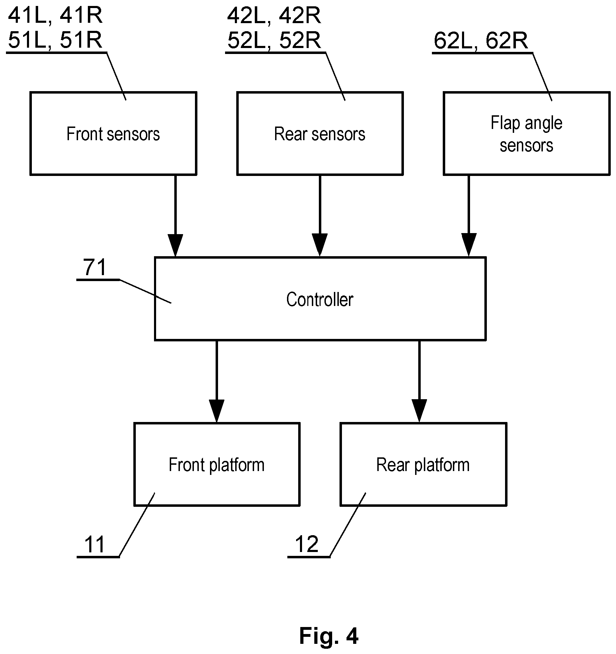

Fig. 4 shows a functional schematic of the system.

### DETAILED DESCRIPTION

The following detailed description is of the best currently contemplated modes of carrying out the invention. The description is not to be taken in a limiting sense, but is made merely for the purpose of illustrating the general principles of the invention.

The system according to the invention is configured to automatically position a semi-trailer 2 driven by a tractor truck 1 with respect to a loading platform 5, on which an automatic loading system can be installed, such as a loading system described in a Polish patent PL237745.

The system comprises a front positioning platform 11 for supporting front wheels 3 carrying the semi-trailer 2 and a rear positioning platform 12 for supporting rear wheels 4 carrying the semi-trailer 2. In the example shown in the drawing, the front wheels 3 carrying the semi-trailer are the rear wheels of the tractor truck 1, wherein the front positioning platform 11 is optionally long enough to also support the front wheels of the tractor truck 1. The system can also work when the tractor truck 1 is disconnected from the semi-trailer and the front of the semi-trailer is carried by supports that rest on the front positioning platform 11. The positioning platforms 11, 12 are each movable laterally and vertically, i.e. their supporting surface on which the wheels are supported is movable. This allows for lateral and vertical adjustment of position of the semi-trailer 2. The term "laterally" is meant to refer to a possibility of shift of the platform in a direction that is transverse to the longitudinal axis of the semi-trailer. The term "vertically" is meant to refer to a possibility to rise or lower the platform, wherein depending on the complexity of the system the platform can have a laterally stable horizontal surface or may have the possibility to adjust for lateral tilt, namely to lift or lower it from the left side independently of the right side and vice versa. For example, the positioning platforms 11, 12, can be mounted on screw mechanisms that enable the horizontal and vertical movement, but other movement mechanisms can be used as well, such as hydraulic actuators.

The system further comprises a pair of flaps 61L, 61R, each being pivotally mounted at their first end to the edge of the loading platform 5 and configured for their second end to rest on the floor of the semi-trailer 2 when the semi-trailer 2 is positioned next to the loading platform 5. Each of the flaps 61L, 61R comprises an angular sensor 62L, 62R configured to measure the tilt angle of the flap, for example with respect to the horizontal plane. Any known sensor type can be used, such as a magnetic sensor of actuator postiion. The flaps 61L, 61R may be narrow rods configured to act only as sensors of vertical position of the plane of the semi-trailer with respect to the angle of rotation of the flaps, or may have a wide form configured to function also as a load-bearing surface for allowing transportation of load from the loading platform 5 to the semi-truck 2. For example, each of the flaps 61L, 61R can be actuated by means of a linear pneumatic actuator with a magnetic sensor of actuator position.

The system further comprises front lateral position sensors 41L, 41R mounted at opposite sides of the front positioning platform 11 and rear lateral position sensors 42L, 42R mounted at opposite sides of the rear positioning platform 12, each configured to measure a lateral distance between the sensor and a side surface of the semi-trailer 2, in particular to determine a difference between distance of the semi-trailer 2 from the left sensor 41L, 42L and the corresponding right sensor 41R, 42R. Any known sensor type can be used, such as a laser distance sensor or an ultrasonic distance sensor.

The system also comprises at least one front vertical position sensor 51L, 51R mounted above the front positioning platform 11 and at least one rear position sensor 52L, 52R mounted above the rear positioning platform 12, configured to measure a vertical distance between the sensor and a top surface of the semi-trailer 2. In the embodiment presented herein, there are two sensors: left and right, mounted symmetrically above the expected position of the semi-trailer, based on which a distance and a horizontal tilt of the semi-trailer 2 can be detected. However, since the horizontal tilt of the semi-trailer 2 can be detected also by means of the flaps 61L, 61R, a single sensor can be used as the rear vertical position sensor, mounted at the center. Similarly, a single sensor can be used as the front vertical position sensor if it is not necessary to measure the tilt at the front of the semi-trailer 2. Any known sensor type can be used, such as a laser distance sensor or an ultrasonic distance sensor.

The position sensors are preferably mounted on posts 21, 22, each in a form of a gate having a width and height larger than the width and height of the semi-trailer 2 that can be handled by the system.

The system is automatically operated by a controller 71 connected to the front sensors 41L**,** 41R, 51L**,** 51R, the rear sensors 42L, 42R, 51L**,** 51R and the flap angle sensors 62L, 62R. The controller is configured, based on the sensor signals, to control the lateral and vertical position (independently for the left side and the right side) of the front platform 11 and of the rear platform 12 such as to position the semi-trailer 2 at a desired position and orientation - preferably, coaxially and coplanarly with the longitudinal axis of the automatic pallet loading system. The controller 71 can be based on a standard type computer equipped with a processor, memory and user input-output interfaces. The controller 71 can operate automatically based on dedicated algorithms or may be controller manually by the user.

The dedicated algorithms may be configured, for example, to perform at least one of the following actions, depending on the capabilities of the platform adjustment and desired automation level of the system:
- measure the angle of the flaps indicated by the flap angle sensors 62L, 62R, and:
   - when the angle of the left flap is different from the angle of the right flap, change the lateral tilt of the rear platform (by lifting or lowering it at the left or right side) such that the rear edge of the floor of the semi-trailer, on which the flaps rest, is horizontal and sensors of both flaps indicate the same angle;
   - when the angle of the flaps is non-zero with respect to the horizontal direction, change the height of the rear platform (by lifting or lowering it) so that the rear end of the surface of the floor of the semi-trailer is coplanar with the front end of the loading platform;
- measure the distance indicated by the rear lateral position sensors 42L, 42R, and:
   - when the distance is different, move the rear platform laterally to the left or to the right, such as to obtain the same distance from both lateral sensors, thereby achieving a central alignment of the rear end of the semi-trailer;
- measure the distance indicated by the front lateral position sensors 41L, 41R, and:
   - when the distance is different, move the rear platform laterally to the left or to the right, such as to obtain the same distance from both lateral sensors, thereby achieving a central alignment of the front end of the semi-trailer; in case the front and rear end of the semi-trailer are centrally aligned, the semi-trailer shall be coaxial with the axis of the automatic pallet loading system;
- measure the distance indicated by the at least one rear vertical position sensor 52L, 52R and the last least one front vertical position sensor 51L, 51R, and:
   - when two front vertical position sensors 51L, 51R are used, when the distance measured by the left sensor 51L is different from the distance measured by the right sensor 51R, change the lateral tilt of the front platform (by lifting or lowering it at the left or right side) such that the front of the semi-trailer is horizontal and both sensors 51L, 51R indicate the same distance (this assumes that the roof of the semi-trailer is parallel to the floor of the semi-trailer);
   - when two rear vertical position sensors 52L, 52R are used, they can be used as a double-check of the horizontal alignment of the rear end of the semi-trailer in a addition to the check made by the flap angle sensors, or instead of the procedure for horizontal alignment based on the flap angle sensors; in that case, when the distance measured by the left sensor 52L is different from the distance measured by the right sensor 52R, change the lateral tilt of the rear platform (by lifting or lowering it at the left or right side) such that the rear of the semi-trailer is horizontal and both sensors 52L, 52R indicate the same distance (this assumes that the roof of the semi-trailer is parallel to the floor of the semi-trailer);
   - compare the distance measured by the front sensor(s) 51L**,** 51R with the distance measured by the rear sensor(s) 52L, 52R (in case a pair of sensors is used and show a different value, their average can be calculated) and when the distance is different, change the height of the front platform (by lifting or lowering it) so that the distance measured is equal and the floor of the semi-trailer is horizontal across its length direction.

The controller can monitor the signals from the sensors continuously during the process of loading or unloading of the semi-trailer, so as to perform the alignment continuously in reaction to varying load of the semi-trailer.

All components of the system can be mounted in weatherproof casings to make it durable and operable regardless of the environmental conditions.

## Claims

1. An automatic positioning system for positioning a semi-trailer (2) with respect to a loading platform (5), **characterized in that** the system comprises:
- a front positioning platform (11) for supporting front wheels (3) carrying the semi-trailer (2) and a rear positioning platform (12) for supporting rear wheels (4) carrying the semi-trailer (2), each of the positioning platforms (11, 12) having its supporting surface movable laterally and vertically;
- a pair of flaps (61L, 61R), each being pivotally mounted at their first end to an edge of the loading platform (5) and configured for their second end to rest on a floor of the semi-trailer (2), wherein ach of the flaps (61L, 61R) comprises an angular sensor (62L, 62R) configured to detect the tilt angle of the flap (61L, 61R);
- front lateral position sensors (41L, 41R) mounted at opposite sides of the front positioning platform (11) and rear lateral position sensors (42L, 42R) mounted at opposite sides of the rear positioning platform (12), each configured to measure a lateral distance between the sensor and a side surface of the semi-trailer (2);
- at least one front vertical position sensor (51L, 51R) mounted above the front positioning platform (11) and at least one rear position sensor (52L, 52R) mounted above the rear positioning platform (12), each configured to measure a vertical distance between the sensor and a top surface of the semi-trailer (2); and
- a controller (71) connected to the sensors (41L, 41R, 42L, 42R, 51L, 51R, 52L, 52R, 62L, 62R) and configured to, based on the sensor signals, control the lateral and vertical position of the front platform (11) and of the rear platform (12).

2. The system according to claim 1, comprising a pair of front vertical position sensors (51L, 51R) and a pair of rear position sensors (52L, 52R).

3. The system according to any of previous claims, wherein the front position sensors (41L, 41R, 51L, 51R) are mounted on a front post (21) having a form of a gate located asides and above the space for accommodating the semi-trailer (2).

4. The system according to any of previous claims, wherein the rear position sensors (42L, 42R, 52L, 52R) are mounted on a rear post (22) having a form of a gate located asides and above the space for accommodating the semi-trailer (2).

5. The system according to any of previous claims, wherein at last one of the left platform (11) and the right platform (12) is movable vertically by allowing variation of its lateral tilt.

## Patentansprüche

1. Automatisches Positionierungssystem zum Positionieren eines Sattelaufliegers (2) in Bezug auf eine Ladeplattform (5), **dadurch gekennzeichnet, dass** das System umfasst:
- eine vordere Positionierungsplattform (11) zum Abstützen von Vorderrädern (3), die den Sattelauflieger (2) tragen, und eine hintere Positionierungsplattform (12) zum Abstützen von Hinterrädern (4), die den Sattelauflieger (2) tragen, wobei jede der Positionierungsplattformen (11, 12) eine Auflagefläche aufweist, die seitlich und vertikal bewegbar ist;
- ein Paar Klappen (61L, 61R), wobei jede Klappe an ihrem ersten Ende schwenkbar an einer Kante der Ladeplattform (5) gelagert ist und derart ausgebildet ist, dass ihr zweites Ende auf einem Boden des Sattelaufliegers (2) aufliegt, wobei jede der Klappen (61L, 61R) einen Winkelsensor (62L, 62R) umfasst, der zum Erfassen des Neigungswinkels der Klappe (61L, 61R) ausgebildet ist;
- vordere seitliche Positionssensoren (41L, 41R), die an gegenüberliegenden Seiten der vorderen Positionierungsplattform (11) angeordnet sind, und hintere seitliche Positionssensoren (42L, 42R), die an gegenüberliegenden Seiten der hinteren Positionierungsplattform (12) angeordnet sind, wobei jeder Sensor zum Messen eines seitlichen Abstands zwischen dem Sensor und einer Seitenoberfläche des Sattelaufliegers (2) ausgebildet ist;
- mindestens einen vorderen vertikalen Positionssensor (51L, 51R), der oberhalb der vorderen Positionierungsplattform (11) angeordnet ist, und mindestens einen hinteren vertikalen Positionssensor (52L, 52R), der oberhalb der hinteren Positionierungsplattform (12) angeordnet ist, wobei jeder Sensor zum Messen eines vertikalen Abstands zwischen dem Sensor und einer oberen Oberfläche des Sattelaufliegers (2) ausgebildet ist; und
- eine Steuereinheit (71), die mit den Sensoren (41L, 41R, 42L, 42R, 51L, 51R, 52L, 52R, 62L, 62R) verbunden ist und derart ausgebildet ist, dass sie auf Grundlage der Sensorsignale die seitliche und vertikale Position der vorderen Plattform (11) und der hinteren Plattform (12) steuert.

2. System nach Anspruch 1, umfassend ein Paar vorderer vertikaler Positionssensoren (51L, 51R) und ein Paar hinterer vertikaler Positionssensoren (52L, 52R).

3. System nach einem der vorhergehenden Ansprüche, wobei die vorderen Positionssensoren (41L, 41R, 51L, 51R) an einem vorderen Pfosten (21) angeordnet sind, der die Form eines Tors aufweist, das seitlich und oberhalb des Raums zur Aufnahme des Sattelaufliegers (2) angeordnet ist.

4. System nach einem der vorhergehenden Ansprüche, wobei die hinteren Positionssensoren (42L, 42R, 52L, 52R) an einem hinteren Pfosten (22) angeordnet sind, der die Form eines Tors aufweist, das seitlich und oberhalb des Raums zur Aufnahme des Sattelaufliegers (2) angeordnet ist.

5. System nach einem der vorhergehenden Ansprüche, wobei mindestens eine der linken Plattform (11) und der rechten Plattform (12) vertikal bewegbar ist, indem eine Veränderung ihrer seitlichen Neigung ermöglicht wird.

## Revendications

1. Système de positionnement automatique pour positionner une semi-remorque (2) par rapport à une plate-forme de chargement (5), **caractérisé en ce que** le système comprend :
- une plate-forme de positionnement avant (11) destinée à supporter les roues avant (3) portant la semi-remorque (2) et une plate-forme de positionnement arrière (12) destinée à supporter les roues arrière (4) portant la semi-remorque (2), chacune des plates-formes de positionnement (11, 12) ayant une surface d'appui déplaçable latéralement et verticalement ;
- une paire de volets (61L, 61R), chacun étant articulé à une première extrémité sur un bord de la plate-forme de chargement (5) et configuré pour que sa seconde extrémité repose sur un plancher de la semi-remorque (2), chacun des volets (61L, 61R) comprenant un capteur angulaire (62L, 62R) configuré pour détecter l'angle d'inclinaison du volet (61L, 61R) ;
- des capteurs de position latérale avant (41L, 41R) montés sur des côtés opposés de la plate-forme de positionnement avant (11) et des capteurs de position latérale arrière (42L, 42R) montés sur des côtés opposés de la plate-forme de positionnement arrière (12), chaque capteur étant configuré pour mesurer une distance latérale entre le capteur et une surface latérale de la semi-remorque (2) ;
- au moins un capteur de position verticale avant (51L, 51R) monté au-dessus de la plate-forme de positionnement avant (11) et au moins un capteur de position verticale arrière (52L, 52R) monté au-dessus de la plate-forme de positionnement arrière (12), chaque capteur étant configuré pour mesurer une distance verticale entre le capteur et une surface supérieure de la semi-remorque (2) ; et
- un contrôleur (71) connecté aux capteurs (41L, 41R, 42L, 42R, 51L, 51R, 52L, 52R, 62L, 62R) et configuré pour, sur la base des signaux des capteurs, commander la position latérale et verticale de la plate-forme avant (11) et de la plate-forme arrière (12).

2. Système selon la revendication 1, comprenant une paire de capteurs de position verticale avant (51L, 51R) et une paire de capteurs de position verticale arrière (52L, 52R).

3. Système selon l'une quelconque des revendications précédentes, dans lequel les capteurs de position avant (41L, 41R, 51L, 51R) sont montés sur un montant avant (21) sous forme de portique, disposé de part et d'autre et au-dessus de l'espace destiné à accueillir la semi-remorque (2).

4. Système selon l'une quelconque des revendications précédentes, dans lequel les capteurs de position arrière (42L, 42R, 52L, 52R) sont montés sur un montant arrière (22) sous forme de portique, disposé de part et d'autre et au-dessus de l'espace destiné à accueillir la semi-remorque (2).

5. Système selon l'une quelconque des revendications précédentes, dans lequel au moins l'une de la plate-forme gauche (11) et de la plate-forme droite (12) est mobile verticalement de manière à permettre une variation de son inclinaison latérale.
